# EUROPÄISCHE PATENTSCHRIFT

(11) **EP 1 022 252 B1**
(45) Veröffentlichungstag und Bekanntmachung des Hinweises auf die Patenterteilung: **22.03.2006**
(21) Anmeldenummer: 00100516.4
(22) Anmeldetag: 12.01.2000
(51) Int. Cl.: C01D 3/24, C01D 3/04

(54) **Verfahren zur Verengung des Kornspektrums von Kalium- und Natriumchloridkristallisaten zur Verbesserung der Rieseleigenschaften**
Process for reducing the particle size distribution of potassium and sodium chloride crystals for improving their flow properties
Procédé de réduction de la granulométrie des cristaux des chlorures de potassium et sodium pour améliorer leurs propriétés d'écoulement

(30) Priorität: 22.01.1999 DE 19902395
(43) Veröffentlichungstag der Anmeldung: 26.07.2000
(73) Patentinhaber: K+S KALI GmbH, 34131 Kassel (DE)
(72) Erfinder: Keidel, Roland, 36115 Ehrenberg (DE); Bakardjiev, Ivan, Dr., 30539 Hannover (DE); Barge, Jürgen, Dr., 06406 Bernburg (DE); Stahl, Ingo, Dr., 34246 Vellmar (DE)

(56) Entgegenhaltungen:
- CH-A- 353 343
- US-A- 3 856 922
- PATENT ABSTRACTS OF JAPAN vol. 013, no. 402 (C-633), 6. September 1989 (1989-09-06) & JP 01 145319 A (JAPAN TOBACCO INC), 7. Juni 1989 (1989-06-07)
- PATENT ABSTRACTS OF JAPAN vol. 010, no. 350 (C-387), 26. November 1986 (1986-11-26) & JP 61 151022 A (JAPAN TOBACCO INC), 9. Juli 1986 (1986-07-09)

## Beschreibung

Eine der wichtigsten Eigenschaften für die Handhabung der in der Kaliindustrie hergestellten Kristallisate ist deren Rieselfähigkeit. Erforderlich ist, daß die Produkte auch nach längeren Lagerungs- oder Transportzeiten so wenig wie möglich verbacken, das ist auch von den Anwendem ausdrücklich erwünscht Zu den Hauptprodukten der Kaliindustrie gehört an erster Stelle Kaliumchlorid. Die starke Neigung dieses Salzes zum Verbacken ist ein großes Problem. Man geht davon aus, daß das Verbacken auf sekundäre Prozesse zurückzuführen ist, Durch natürliche Feuchte- und Temperaturschwankungen werden Anlöse- und Rückkristallisationsvorgänge hervorgerufen. Die folgenden Mikroablagerungen, welche vorzugsweise die am stärksten negativ gekrümmten Oberflächenbereiche bedecken, können zu starren Überbrückungen der nebeneinander liegenden Körner fuhren. In der Tat verwachsen die Körner an deren Berührungsflächen zusammen und dadurch wird die gesamte Masse verfestigt Werden die Kristallisate ohne Restfeuchte hergestellt und danach in einer absolut trockenen Atmosphäre aufbewahrt, bleiben sie rieselfähig.

Nach dem gegenwärtigen Stand der Technik wird die Verbackungsneigung der Kalium- bzw. Natriumchloridprodukte auf verschiedene Art und Weise bekämpft:

Hydrophobierend wirkende Stoffe werden eingesetzt, um auf die Wasseraufnahme an den Komoberflächen einzuwirken. Dadurch werden die in jedem Fall unvermeidlich folgenden Anlösungsvorgänge an der Oberfläche unterdrückt. Falls letzteres sich nicht vermeiden läßt, kann die Rückkristallisation von schon aufgelösten Anteilen durch Zugabe kristallisationshemmender Stoffe gebremst werden, um die Entstehung von festen Bindungen zwischen den Körnern zu unterbinden.

Zur Hydrophobierung der Oberflächen wird z.B. nach DE 10 75 642 die Tensidwirkung von Aminen ausgenutzt. Deren Moleküle lagern sich so an das Salz an, daß die unpolaren Kohlanwasserstoffketten in den freien Raum nach außen ragen. Die Antibackwirkung wird nicht nur durch Verhindern der Wasseraufnahme gewährleistet, sondern auch dadurch, daß das Überwachsen der ziemlich fest an der Oberfläche gebundenen Amine mit Kristallbausteinen nicht ohne weiteres stattfinden kann. In bestimmten Fällen ist von den Anwendem eine starke Hydrophobierung unerwünscht Dementsprechend wird durch eine Verkürzung der Kohlenwasserstoftkette die Hydrophobie verringert. Dabei läßt erfahrungsgemäß die Antibackwirkung nicht wesentlich nach, so daß auf diese Art und Weise die gewünschte Qualität gesteuert werden kann.

In manchen Fällen, insbesondere wenn Amine nicht zulässig sind, werden Fettsäuren bzw. deren Salze gebraucht (DE 12 05 060). Gewisse Effekte lassen sich ebenfalls durch Sulfonverbindungen erzielen.

Es sind auch anorganische Antibackmittel bekannt. Für Steinsalz sowie auch für sehr magnesiumarmes Kaliumchlorid wird häufig Natrium- bzw. Kaliumhexacyanoferrat als Antibackmittel eingesetzt.

Die JP (A) 001145319 offenbart die Zugabe von Natriumhexametaphosphat in die zu kristallisierende Salzlösung bei der Herstellung von Tafelsalz, um Kristalle bestimmter Kristallstruktur zu erhalten, die die Rieseleigenschaften des Produkts verbessern.

Des Weiteren ist nach CH 35 33 43 ein Verfahren bekannt, bei dem ein durch Kristallisation gewonnenes Produkt, nämlich Kochsalz nachträglich mit komplexen Phosphaten z.B. Natriumpolymetaphosphat behandelt wird. Dabei wird diese Substanz in Form einer wässrigen Lösung auf trockenes oder feuchtes Salz aufgesprüht oder der auskristallisierte Salzbrei mit diesem Komplexsalz vermischt Vorgeschlagen wird eine Anwendung von 0,0001 % bis 1 % Masse bezogen auf die zu behandelnde Salzmenge. Auf diese Weise soll ein Verbacken weitgehend vermieden werden.

Auch die JP (A) 61151022 offenbart die Zugabe von z.B. Natriumhexametaphosphat durch Aufsprühen einer entsprechenden Lösung auf ein kristallines Tafelsalz, um die Fließbarkeit positiv zu beeinflussen.

Die US 3,856,922 beschreibt Antibackmittelzugaben in die zu kristallisierende NaCl-Lösung sowie auf auskristallisierte Natriumchloridkristalle. Vorgeschlagen wird als Antibackmittel N-2-Acetamid-Iminodiessigsäure oder N, N- bis -(2,2'-Acetamido)-Glycin.

Die bekannten Antibackmittelzugaben sind sämtlich Sekundärmaßnahmen, die eine relativ hohe Dosis an diesen Substanzen erfordern.

Außerdem müssen in der Praxis viele verschiedene Faktoren bei den in Frage kommenden Lösungen berücksichtigt werden. Da es bei der Konditionierung der Kristallisate unvermeidlich zu einer Verunreinigung kommt, sind die zugegebenen Mengen an Fremdstoffen von substantieller Bedeutung. Neben den Wirtschaftlichkeitskriterien wird zunehmend Rücksicht auf die Umweltverträglichkeit der zur Disposition stehenden Substanzen genommen. Bei einigen Anwendungen sind bestimmte Nebenstoffe wegen spezifischer Probleme nicht in höheren Konzentrationen zulässig.

**"**Die technische Aufgabe besteht darin, den Prozess der Lösungskristaltisation von Natrium- und Kaliumchlorid in der Muttelösung des Primärkristallisationsprozesses sowie in der bei Feuchteschwankungen beziehungsweise bei Restfeuchteveriagerung sich auf dem Endprodukt bildenden anhaftenden Salzlösung so zu beeinflussen, dass eine solche Depotwirkung auf dem getrockneten Endprodukt erzielt wird, dass die Rieselfähigkeit bei gleichzeitig minimierter sekundärer Antibackmittelzugabe verbessert wird".

Die Aufgabe wurde dadurch gelöst dass man Natriumpolymetaphosphat als wässrige Lösung in einem Primärschritt in die zu kristallisierende Mutterlösung und in einen Sekundärschritt auf das feuchte Primärkristallisat aufgibt.

Es wurde nun gefunden, daß im Primärschritt eine geringe Zugabe des an sich bekannten sekundär zum Einsatz kommenden Antibackmittels Natriumpolymetaphosphat (NaPO₃)ₓ in die klare heiße zur Kristallisation gelangenden Rohsalzlösung, die außer der zu gewinnenden Komponente noch weitere Salze gelöst enthält, den Kristallisationsvorgang so beeinflußt daß ein gleichmäßig gekörntes Kristallisat entsteht Das Komspektrum wird deutlich verengt und die spezifische Oberfläche der Körner vermindert. Es wird eine Depotwirkung erzielt, was die Wirkung der zur Steigerung der Rieselfähigkeit eingesetzten Konditionierungsmittel verbessert.

Es hat sich herausgestellt, daß im Primärschritt Natriumpolymetaphosphat in solchen Dosierungen ausreicht, dass sich eine Konzentration an Natriumpolymetaphosphat in der Mutterlösung von 1 bis 100 g pro m² Lösung einstellt und im Primärkristallisat ein PO₄-Gehalt von < 1 ppm bezogen auf die Trockensalzmenge erreicht wird.

Die Zugabe von (NaPO₃)ₓ im Primärschritt erfolgt in die zu kristallisierende Salzlösung vor der eigentlichen Kristallisation vorzugsweise in Form einer Lösung, die eine Konzentration von etwa 3 - 7% Masse vorzugsweise 5 - 6 % Masse haben sollte, um eine vollständige Verteilung und Auflösung zu erreichen. Dabei wird in der zu kristallisierenden Salzlösung eine Konzentration an (NaPO₃)ₓ von 1 bis 100 g/m³ Lösung, vorzugsweise bis 50 g/m³ angewendet Auf diese Weise werden die ansonst zu erwartenden Komplikationen durch Auskristallisation von Doppelsalzen sowie Ablagerungen von phosphathaltigen Niederschlägen sicher verhindert.

Nach der Zugabe von Natriumpolymetaphosphat im Primärschritt folgt anschließend eine gleichmäßige Besprühung des feuchten Primärkristallisates im Sekundärschritt ebenfalls mit wässriger Natriumpolymetaphosphatlösung mit einer Konzentration von 0,1 bis 10 % Masse, so dass im getrockneten Kalium-oder Natriumchloridprodukt ein gleichverteilter Gehalt von 3 bis 50 g Natriumpolymetaphasphat pro t Endprodukt erreicht wird.

Die Mengen der aufgelösten Zusatzstoffe in der anhaftenden Lösung können viel kleiner sein als die, die sich in der ursprünglichen Mutterlösung befinden, da die Zusatzstoffe beim Abtrocknen der Haftflüssigkeit wieder aufkonzentriert werden. So bleibt die Menge des Zusatzstoffes (NaPO₃)ₓ, die die sekundäre Kristallisation während der Trocknung positiv beeinflusst, bezogen auf die gesamte Masse des Produktes, gering.

Der Einsatz von (NaPO₃)ₓ in der an den Kömem anhaftenden Feuchte zur Sekundärbehandlung lässt sich in der Praxis ohne prinzipielle Schwierigkeiten durchführen. Versuche zeigten, daß (NaPO₃)ₓ - Mengen im Bereich zwischen 3 und 50 g/t im getrockneten Produkt einen ausreichenden Effekt sichern. Die Ware wird mit einer wäßrigen Lösung gleichmäßig besprüht. Erforderlich ist, daß weitgehend eine gleichmäßige Verteilung erzielt wird. Das gelingt leichter mit dünnerer Lösung. Eine beträchtliche Erhöhung der Feuchte im Produkt kann jedoch keinesfalls in Kauf genommen werden, da der Energieaufwand für die Trocknung infolgedessen steigen würde. Es hat sich ergeben, daß eine (NaPO₃)ₓ-Konzentration von 0.1 bis 10 Masse-%, vorzugsweise 0,1 bis 2 Masse-%, einen ausgewogenen Kompromiß darstellt. Der aufgebrachte Lösungsfilm mit dem (NaPO₃)ₓ als Zusatzstoff, führt nach der Trocknung zu unterschiedlichen (NaPO₃)ₓ - Masseanteilen bei einem kleinen Korn gegenüber einem großen Korn. Die feinste Komfraktion trägt dabei den größeren (NaPO₃)ₓ Masseanteil. Dieser überschreitet kaum den Faktor drei gegenüber dem (NaPO₃)ₓ - Masseanteil der gröbsten Kornfraktion verschiedener Salze, so dass unter diesen Umständen eine genügende Oberflächenbedeckung vorhanden ist

Durch gleichmäßig verteilte Zugabe von (NaPO₃)ₓ in fester Form auf das getrocknete Kalium- bzw. Natriumchlorid kann eine weitere Senkung der Verbackungsneigung erzielt werden. In diesem Fall ist aber eine gleichmäßige Verteilung von möglichst geringen Mengen an Zusatzstoff ein sehr schwieriges Problem. Es werden deswegen überschüssige Mengen von (NaPO₃)ₓ gebraucht, um einen Effekt zu sichern. Die Wirkung macht sich ab 10 - 30 g/t bemerkbar, und es können bis zu 200 g/t zum getrockneten Produkt zugegeben werden. Eine kombinierte Behandlung vor und nach der Trocknung ist für langfristige Lagerzeiten oder bei Lieferungen unter erschwerten Klimabedingungen (z.B. über See) sinnvoll.

Eine weitere Verbesserung der Fließeigenschaften durch Zugabe zusätzlicher Reagenzien wird bei feinkörnigen Produkten mit einer mittleren Korngröße unter 0,5 mm erreicht. Die Konditionierung erfolgt z.B. mit Hexacyanoferrat-Salzen oder amorpher Kieselsäure in einer Zugabemenge von bis zu 200 g/t bzw. 0,1 %.

Die Erfindung wird anhand nachfolgender Ausführungsbeispiele näher erläutert:

### Beispiel 1:

Die Wirkung von (NaPO₃)ₓ wurde bei der Produktion von feinkörnigem, reinem Natriumchlorid durch Kristallisation geprüft. Die Ausgangslösung enthält neben dem gelösten Natriumchlorid hauptsächlich Kaliumchlorid bis 15 g/l, [Mg²⁺] und [Ca²⁺] bis 3 g/l und [SO₄²] bis 0,2 g/l. In der Betriebsanlage wurde ein 99,9 %iges Natriumchlorid mit anhaftendem Wassergehalt zwischen 0,02 und 0,05 % und einer mittleren Komverteilung mit den RRSB-Parametem (nach Rosin, Rammler, Sperling und Bennett) d' = 0,45 mm und n = 1,9 hergestellt. Die Werte des Verbackungstestes nach der "Abscherkraftmethode" für auf diese Art und Weise gewonnenes. unbehandeltes Gut liegen im Normalfall über 250 N. Bei einer Behandlung des Feuchtproduktes vor dem Trocknen mit Natriumferrocyanid im Bereich von 80 - 100 g/t sinkt dieser Wert auf unter 80 N.

In einem Dauerversuch über eine Woche wurde durch Zufuhr einer Natriumpolymetaphosphatlösung mit einer Konzentration von 5 % Masse in die Kristallisationslösung eine (NaPO₃)ₓ-Konzentration von 50 - 60 g/m³ in der Mutterlösung aufrechterhalten. Dies bewirkte einen PO₄-Gehalt von ca. 1 ppm im Produkt. Darüber hinaus wurde das schleuderfeuchte Kristallisat mit einer wäßrigen (NaPO₃)ₓ-haltigen Lösung gleichmäßig besprüht. Die Konzentration dieser Lösung betrug 0,1 - 0,2 Masse-% und die zugegebenen Raten haben, ca, 10 g/t PO₄ im getrockneten Produkt gesichert, dessen Werte nach RRSB d' = 0,44 und n = 2,8 betrugen. Die Erhöhung des Gleichmäßigkeitsfaktors n zeigt deutlich die Verengung des Komspektrums.

Der Verbackungstest nach der "Abscherkraftmethode" für das nicht mit zusätzlichem Kaliumferrocyanid behandelte Produkt ergab Werte zwischen 60 und 80 N.

Positive Effekte wurden auch beim Lagern und Verladen des Produktes beobachtet. Üblicherweise wird das Salz in Säcke ä 25 bzw. 50 kg abgepackt und in mehreren Lagen auf einer Palette gelagert, wobei meist 2 Paletten direkt übereinander gestapelt werden. Die behandelte, auch in den unteren Palettenlagen mit entsprechendem Aufliegedruck gelagerte Ware zerfällt nach 2-monatiger Lagerzeit beim Umschlagen wieder in kleinere Brocken, die sich mit der Hand ohne größere Kraftanstrengung zu rieselfähigen Kömchen zerdrücken lassen. Dies ist ohne Behandlung nicht der Fall. Parallel gelagerte, unbehandelte Ware verhärtet nach dieser Lagerzeit zu einem einzigen Block. Auch beim Umschlagen bleiben große "versteinte" Brocken, die mit bloßer Handkraft nicht zerdrückt werden können.

### Beispiel 2:

Proben, die wie in Beispiel 1 gewonnen wurden, wurden vor dem Trocknen statt mit (NaPO₃)ₓ-Lösung mit 25 g/t Natriumferrocyanid in Form einer wässrigen, 0,5%igen Lösung konditioniert. Das Verbackungsverhalten des Produktes ist ähnlich wie in Beispiel 1.

### Beispiel 3:

In einer Fabrikanlage nach dem Löse-Kristallisationsverfahren werden ca. 30 t/h Kaliumchlorid mit einem Gehalt von 95 % KCl hergestellt. Die aus mehreren Jahren gemittelte Kornverteilung hat nach RRSB die Parameter: d' = 0,62 mm und n = 3,2.

In der Kristallisationslösung wurde eine Konzentration von 1 bis 2 g/m³ (NaPO₃)ₓ durch ständige Zufuhr einer Natriumpolymetaphosphatlösung mit einer Konzentration von 6 % Masse eingesteilt. Das schleuderfeuchte Kristallisat (H₂O-Gehalt um 2 Masse-%) wurde mit einer wäßrigen (NaPO₃)ₓ-haltigen Lösung gleichmäßig besprüht. Die Konzentration dieser Lösung betrug 0.4 Masse-% und die zugegebenen Raten haben ca. 10 g/t PO₄ im getrockneten Produkt gesichert.

Zum Vergleich der Verbackungsneigung eines unbehandelten und eines erfindungsgemäß behandelten Kristallisates wurden die Vergleichsprodukte nach der "Abscherkraftmethode" getestet. Die Kornverteilung wurde für jeden Test folgendermaßen eingestellt.

| | |
|---|---|
| < 1,00 mm | 1 % |
| 0,80 mm | 9 % |
| 0,50 mm | 55 % |
| 0,25 mm | 31 % |
| 0,16mm | 2 % |
| <0,16mm | 2 % |

Die erhaltenen Scherkräfte erreichten bei nichtbehandelbem Gut Werte zwischen 110 und 150 N.

Mittlere Tagesproben des behandelten Kristallisates wurden durch Siebanalyse und "Abscherkraftmethode" bei einer wie oben nachgestellten Komverteilung untersucht. Die Ergebnisse sind in der folgenden Tabelle zusammengefaßt, wobei die Werte für das anhaftende Wasser und die RRSB-Paramefer für die Urprobe gelten:

| **Tag** | **Verb. Test (N)** | **Anh. H**_{**2**}**O (%)** | **d' (mm)** | **n (-)** |
|---|---|---|---|---|
| 1 | 28 | 0,06 | 0,59 | 4,20 |
| 2 | 31 | 0,07 | 0,58 | 4,60 |
| 3 | 23 | 0,04 | 0,63 | 4,50 |

Durch den Einfluß von (NaPO₃)ₓ sinken die Werte auf unter 30 N. Es läßt sich feststellen, daß die Komgrößenverteilung der Urproben durch den Einfluß von (NaPO₃)ₓ etwas enger wird - der Gleichmäßigkeitsfaktor steigt von 3,2 auf über 4. Infolgedessen sind die Verbackungs-Testwerte der entsprechend präparierten Proben tendenziell höher als bei den Urproben.

Bei der Beobachtung des Produktes während der Verladung nach einer Lagerungszeit von 2 Wochen wurde im Vergleich mit nichtbehandelten Produkten eine stark herabgesetzte Verbackung festgestellt. Es bleiben nach dem Schneiden eines Schüttkegels (ca. 1500 t) zwar steile Wände, aber gleichzeitig rutschen dabei größere Mengen an Ware von höheren Bereichen. Während des Schüttens rieselt das Produkt völlig frei - es werden keine Brocken festgestellt.

### Beispiel 4:

Wie in Beispiel 3 werden in einer Fabrikanlage nach dem Löse-Kristallisationsverfahren ca. 30 t/h Kaliumchlorid mit einem Gehalt von 95 % KCI hergestellt. Die aus mehreren Jahren gemittelte Kornverteilung hat nach RRSB die Parameter: d'= 0,62 mm und n = 3,2. Das schleuderfeuchte Kristallisat (H₂O-Gehalt um 2 Masse-%) wurde mit einer wäßrigen kaliumferrocyanidhaltigen Lösung gleichmäßig besprüht. Die Konzentration dieser Lösung betrug 0,5 Masse-% und die zugegebenen Raten haben ca. 120 g/t im getrockneten Produkt gesichert. Der Verbackungstest für das auf diese Art und Weise behandelte Gut führt zu Werten, die unter ca, 30 N liegen. Dies ist durch Langzeit-Beobachtungen gesichert.

Zum Vergleich wurde ein Produkt wie oben beschrieben hergestellt, wobei in der Kristallisationslösung eine Konzentration von 1 bis 2 g/m² (NaPO₃)ₓ durch ständige Zufuhr einer Lösung mit einer Konzentration von 5 % Masse Natriumpolymetaphosphat eingestellt wurde. Das schleuderfeuchte Kristallisat (H₂O-Gehalt um 2 Masse-%) wurde mit einer wäßrigen (NaPO₃)ₓ - und kaliumferrocyanid-haltigen Lösung gleichmäßig besprüht. Die Konzentration dieser Lösung betrug 0,3 Masse-% (NaPO₃)ₓ und 0,9 Masse% Kaliumferrocyanid. Die zugegebenen Raten haben ca. 10 g/t PO₄ und 30 g/t Kaliumferrocyanid im getrockneten Produkt gesichert.

Der Verbackungstest für das solchermaßen behandelte Gut führte zu Werten unter 20 N.

Das Verhalten des Produktes beim Verladen nach 2 Wochen Lagerungszeit ist deutlich verändert. Es setzen sich im Vergleich viel größere Mengen des Produktes beim Einsatz des Greifers in Bewegung als bei nichtbehandelten Produkten. Nach freiem Fall eines Gemenges aus einer Höhe von ca. 2 m bleiben z. T. Brocken. Diejenigen mit einem Durchmesser von 5 bis 10 cm lassen sich mit der Hand leicht und vollständig zerdrücken, was bei den nichtbehandelten Proben unmöglich ist

### Beispiel 5:

Die Wirkung von (NaPO₃)ₓ wurde auch bei der Produktion von feinkörnigem Kaliumchloridkristallisat geprüft. Bei der üblichen Herstellung liegt die Reinheit bei 99 %, die anhaftende Feuchte zwischen 0,04 und 0,10 %, und die mittlere Komverteilung hat nach RRSB die folgenden Parameter, d' = 0,27 mm und n = 2,0. Der Verbackungstest für das unbehandelte Gut führt zu Werten, die zwischen 200 und 300 N liegen. Die Werte wurden in der Regel bei folgender Komverteilung ermittelt:

| | |
|---|---|
| > 0,80 mm | 1 % |
| 0,50 mm | 9 % |
| 0,25 mm | 34 % |
| 0,16 mm | 20 % |
| 0,09 mm | 25 % |
| < 0,09 mm | 11 % |

Die Versuchsbedingungen waren folgende: Die (NaPO₃)ₓ - Konzentration in der Kristallisationslösung wurde durch Zufuhr einer Lösung mit einer Konzentration von 4 % Masse Natriumpolymetaphosphat bei 1 bis 2 g/m³ gehalten; das feuchte Kristallisat (H₂O - Gehalt ca. 8 %) wurde mit einer 0,5 % igen (NaPO₃)ₓ - Lösung gleichmäßig vor der Trocknung besprüht, so daß eine PO₄-Dotierung von ca. 10 g/t auf dem getrockneten Produkt erreicht wurde. Die gewonnenen Ergebnisse, wobei der Verbackungstest bei o. g, nachgestellter Kornverteilung durchgeführt wurde, sind in folgender Tabelle wiedergegeben:

| **Tag** | **Verb. Test (N)** | **Anh. H**_{**2**}**O (%)** | **d' (mm)** | **n (-)** |
|---|---|---|---|---|
| 1 | 48 | 0,05 | 0,29 | 2,80 |
| 2 | 61 | 0,08 | 0,28 | 2,70 |
| 3 | 53 | 0,03 | 0,30 | 3,10 |

Durch den Einfluß von (NaPO₃)ₓ sinken die Werte auf 50 bis 60 N. Es läßt sich feststellen, daß die Komgrößenverteilung der Urproben durch den Einfluß von (NaPO₃)ₓ deutlich enger wird - der Gleichmäßigkeitsfaktor steigt von 2,0 auf ca. 3. Die Verbackungstestwerte bei den Urproben fallen im Regelfall sogar etwas niedriger aus.

Das Verhalten des Produktes beim Verladen nach 2 Wochen Lagerungszeit ist deutlich verändert Es setzen sich im Vergleich viel größere Mengen des Produktes beim Einsatz des Greifers in Bewegung als bei nichtbehandelten Produkten. Nach freiem Fall eines Gemenges aus einer Höhe von ca, 2 m bleiben z. T. Brocken. Diejenigen mit einem Durchmesser von 5 bis 10 cm lassen sich mit der Hand leicht und vollständig zerdrücken, was bei den nichtbehandelten Proben unmöglich ist.

### Beispiel 6:

Proben, die wie in Beispiel 3 und 5 gewonnen wurden, wurden nach dem Trocknen nachträglich mit 80 g/t Aminen bzw. mit 80 g/t Fettsäure konditioniert. Bei dem gröberen Kristallisat (gewonnen wie nach Beispiel 3) wurde keine signifikante weitere Senkung der Verbackungstestwerte nach der "Abscherkraftmethode" nachgewiesen. Bei dem feinkörnigen Salz (gewonnen wie in Beispiel 5) zeigte sich in beiden Fällen ein positiver Effekt. Die Verbackungstestwerte fallen von ca. 50 bis 60 N auf z.T. unter 20 N.

### Beispiel 7:

Proben, die wie in dem Dauerversuch von Beispiel 1 gewonnen wurden, wurden
a) nach dem Trocknen nachträglich mit ca. 10 g/t (NaPO₃)ₓ bzw.
b) nach dem Trocknen mit ca. 0,1 % amorpher Kieselsäure (sonst übliche Menge bis 1 %) trocken in einem Mischer und
c) vor dem Trocknen zusätzlich mit ca. 10 g/t Natriumhexacyanoferrat in Form einer wäßrigen Lösung konditioniert und wie in Beispiel 1 beschrieben abgelagert.

Der Verbackungstest nach der "Abscherkraftmethode" ergab für solchermaßen behandelte Ware Werte um 30 N.

Beim Lagern des Produktes war zu beobachten, daß auch nach 2-monatiger Lagerzeit die Säcke aus unteren Palettenlagen beim Umschlagen "weich" waren. Beim Anheben und Umdrehen des Sackes rieselte die Ware hörbar innerhalb des Sackes, den man an allen Stellen mit der Hand eindrücken konnte. In der Ware fanden sich nur wenige leicht verhärtete Brocken, die ohne Kraftanstrengung zu rieselfähigen Kömem zerdrückt werden konnten. Ohne Behandlung verhärtet parallel gelagerte Ware zu einem einzigen Block, so daß der gefüllte Sack auch beim Anheben und Umdrehen die äußere Form eines "quaderförmigen" Gebildes beibehält.

## Patentansprüche

1. Verfahren zur Beeinflussung der Lösungskristallisation von Kalium- und Natriumchlorid zur Verbesserung der Rieseleigenschaften unter Zugabe von Natriumpolymetaphosphat in die zu kristallisierende Lösung, **dadurch gekennzeichnet, dass** Natriumpolymetaphosphat als wässrige Lösung im Primärschritt in solcher Dosierung in die zu kristallisierende Mutterlösung gegeben wird, dass sich eine Konzentration an Natriumpolymetaphosphat in der Mutterlösung von 1 bis 100 g pro m³ Lösung einstellt und im Primärkristallisat ein PO₄-Gehalt von kleiner 1 ppm, bezogen auf die Trockensalzmenge erreicht wird und das feuchte Primärkristallisat anschließend im Sekundärschritt ebenfalls mit wässriger Natriumpolymetaphosphatlösung mit einer Konzentration von 0,1 bis 10 % Masse gleichmäßig besprüht wird, dass im getrockneten Kalium- oder Natriumchloridprodukt ein gleichverteilter Gehalt von 3 bis 50 g Natriumpolymetaphosphat pro t Endprodukt erreicht wird.

2. Verfahren nach Anspruch 1, **dadurch gekennzeichnet, dass** die Konzentration an Natriumpolymetaphosphat in der Mutterlösung auf vorzugsweise bis 50 g/m³ Lösung eingestellt wird.

3. Verfahren nach Anspruch 1, **dadurch gekennzeichnet, dass** die Konzentration der wässrigen Natriumpolymetaphosphatlösung, die in die zu kristallisierende Mutterlösung gegeben wird, 3 bis 7 % Masse beträgt.

## Claims

1. A method of influencing the solution crystallisation of potassium and sodium chloride for improving the free-running properties with the addition of sodium polymetaphosphate to the solution to be crystallised, **characterised in that** sodium polymetaphosphate is added in the form of an aqueous solution in the primary step to the mother solution to be crystallised in such metered amount that a concentration of sodium polymetaphosphate in the mother solution of 1 to 100 g Per m³ of solution is adjusted and in the primary crystallate a PO₄ content of less than 1 ppm with respect to the amount of dry salt is achieved and then in the secondary step the moist primary crystallate is also uniformly sprayed with aqueous sodium polymetaphosphate solution at a concentration of 0.1 to 10% by mass, such that an equally distributed content of 3 to 50 g of sodium polymetaphosphate per t of end product is achieved in the dried potassium or sodium chloride product.

2. A method according to claim 1 **characterised in that** the concentration of sodium polymetaphosphate in the mother solution is adjusted to preferably up to 50 g/m³ of solution.

3. A method according to claim 1 **characterised in that** the concentration of the aqueous sodium polymetaphosphate solution which is added to the mother solution to be crystallised is 3 to 7% by mass.

## Revendications

1. Procédé pour influencer la cristallisation en solution de chlorure de potassium et de chlorure de sodium en vue d'améliorer les propriétés de ruissellement, par addition de polymétaphosphate de sodium à la solution à cristalliser, **caractérisé en ce que** l'on charge, dans la solution mère à cristalliser, du polymétaphosphate de sodium sous la forme d'une solution aqueuse, dans le stade primaire, en une dose telle qu'il s'établit une solution de polymétaphosphate de sodium dans la solution mère de 1 à 100g par m³ de solution et que l'on atteint dans le produit cristallisé primaire une teneur en PO₄ inférieure à 1 ppm, rapportée à la quantité de sel sec et **en ce qu'**on pulvérise uniformément sur le produit cristallisé primaire humide ensuite, dans le stade secondaire, également une solution aqueuse de polymétaphosphate de sodium ayant une concentration de 0,1 à 10 % en poids, **en ce que** l'on obtient, dans le chlorure de potassium ou le chlorure de soduim produit séché, une teneur uniformément répartie de 3 à 50g de polymétaphosphate de sodium par tonne de produit final.

2. Procédé suivant la revendication 1 **caractérisé en ce qu'**on règle la concentration de polymétaphosphate de sodium dans la solution mère de préférence jusqu'à 50g/m³ de solution.

3. Procédé suivant la revendication 1 **caractérisé en ce que** la concentration de la solution aqueuse de polymétaphosphate de sodium, qui est chargée dans la solution mère à cristalliser, est comprise entre 3 et 7 % en poids.
